# DEMANDE DE BREVET EUROPEEN

(11) **EP 2 565 109 A1**
(43) Date de publication de la demande: **06.03.2013**
(21) Numéro de dépôt: 12182501.2
(22) Date de dépôt: 31.08.2012
(51) Int. Cl.: B62J 6/02

(54) **Eclairage avant de bicyclette comportant une fonction catadioptrique**

(30) Priorité: 31.08.2011 FR 1157672
(71) Demandeur: AXA Stenman France, 58500 Clamecy (FR)
(72) Inventeur: Mosset, Bernard, 58000 NEVERS (FR)
(74) Mandataire: Regimbeau

(57) **Abrégé**

L'invention concerne un éclairage avant de bicyclette, comprenant une ampoule halogène (1), un réflecteur (6) pour réfléchir les rayons lumineux émis par le filament de l'ampoule (1), une lentille (5) pour protéger le réflecteur et éventuellement diffuser les rayons réfléchis par le réflecteur (6) à travers une zone d'éclairement (51), et un catadioptre, ledit éclairage étant caractérisé en ce que ledit catadioptre comprend deux éléments catadioptriques (52) symétriques agencés à la surface de la lentille (5) dans la zone d'ombre des électrodes de l'ampoule halogène et en ce que ladite ampoule (1) présente un élément d'indexation par rapport au réflecteur (6), de sorte à contrôler la position des électrodes par rapport aux éléments catadioptriques (52).

## Description

### DOMAINE DE L'INVENTION

La présente invention concerne un éclairage avant de bicyclette comportant une fonction catadioptrique.

### ARRIERE PLAN DE L'INVENTION

Certains pays européens imposent, sous certaines conditions de circulation, que les bicyclettes comportent un élément éclairant et un élément catadioptrique.

Ces éléments doivent répondre à des caractéristiques techniques qui peuvent être drastiques en ce qui concerne les niveaux requis.

Par exemple, l'Allemagne et la France imposent des valeurs lumineuses minimales dans une zone rectangulaire en-dessous du plan horizontal parallèle à la route passant par l'axe de l'élément éclairant, tout en limitant le niveau lumineux au-dessus de ce plan afin d'éviter l'éblouissement des conducteurs pouvant venir à contre-sens.

Par ailleurs, l'élément catadioptrique doit être composé soit d'une seule surface, soit de surfaces distinctes suffisamment proches.

Cet élément catadioptrique doit en outre conserver un effet rétro-réfléchissant dans des zones hors de l'axe selon un angle pouvant aller jusqu'à 20°.

Pour faciliter l'installation de l'élément éclairant et du catadioptre sur la bicyclette, il a déjà été proposé un éclairage supportant simultanément ces deux éléments.

La solution la plus fréquente est toutefois de bien séparer la zone éclairante et la zone catadioptrique.

Le fait que les fonctions d'éclairement et catadioptrique soient portées par un même support permet de n'utiliser qu'un seul système de fixation (par exemple, une patte de fixation qui peut être vissée sur la fourche de la bicyclette).

Cependant, le support est alors relativement encombrant.

Pour diminuer l'encombrement et le poids de l'éclairage, il a donc été proposé de placer le catadioptre sur l'élément éclairant, dans l'axe de l'ampoule halogène.

En effet, moins de lumière sort dans l'axe de l'ampoule car cette zone est dans l'ombre du culot.

L'installation d'un catadioptre dans l'axe de l'ampoule pénalise donc peu la qualité de l'éclairage fourni, le diamètre de l'élément éclairant devant toutefois quand même être augmenté par rapport aux systèmes classiques pour compenser son masquage partiel par le catadioptre.

Le document EP 0 406 565 propose quant à lui un éclairage de bicyclette comprenant une ampoule à filament munie d'un culot à vis, un réflecteur, une lentille et deux éléments catadioptriques agencés de part et d'autre de la lentille par rapport à un axe horizontal.

Cependant, la dimension et l'emplacement de ces éléments catadioptriques ne sont pas optimisés vis-à-vis de l'encombrement global de l'éclairage.

Il existe donc un besoin de procurer un éclairage avant qui soit encore moins encombrant que les systèmes existants sans dégrader la qualité de l'éclairement, c'est-à-dire qui réponde toujours aux normes les plus sévères dans ce domaine.

En particulier, certains constructeurs souhaitent équiper leur bicyclette d'éclairages conformes avec les exigences de tous les pays européens, mais sans pénaliser l'esthétique de leur bicyclette pour les pays qui n'exigent qu'un catadioptre.

Un éclairage plus compact incluant à la fois catadioptre et fonction éclairante permettrait donc de répondre à cette demande.

Un but de l'invention est donc de concevoir un éclairage avant de bicyclette intégrant un élément catadioptrique et procurant un éclairement d'excellente qualité, mais qui soit plus compact.

### BREVE DESCRIPTION DE L'INVENTION

Conformément à l'invention, il est proposé un éclairage avant de bicyclette comprenant une ampoule halogène, un réflecteur pour réfléchir les rayons lumineux émis par le filament de l'ampoule, une lentille pour protéger le réflecteur et éventuellement diffuser les rayons réfléchis par le réflecteur à travers une zone d'éclairement, et un catadioptre, ledit éclairage étant **caractérisé en ce que** ledit catadioptre comprend deux éléments catadioptriques symétriques agencés à la surface de la lentille dans la zone d'ombre des électrodes de l'ampoule halogène et en ce que ladite ampoule présente un élément d'indexation par rapport au réflecteur, de sorte à contrôler la position des électrodes par rapport aux éléments catadioptriques et ainsi assurer la répétabilité du positionnement des électrodes par rapport aux éléments catadioptriques.

D'une manière générale, lesdits éléments catadioptriques occupent sensiblement deux secteurs angulaires de la lentille. On entend par là que chaque élément catadioptrique présente la forme générale d'un secteur angulaire de la lentille, même si ses frontières ne sont pas des segments rectilignes mais des courbes.

De manière avantageuse, la zone d'éclairement de la lentille présente une forme générale de sablier, complémentaire de la forme desdits éléments catadioptriques.

Selon un mode de réalisation de l'invention, la surface de la lentille comporte des prismes dans la zone d'éclairement.

Selon une forme d'exécution de l'éclairage, lesdits éléments catadioptriques sont moulés dans la lentille.

De manière alternative, lesdits éléments catadioptriques sont rapportés sur la lentille.

De préférence, la distance minimale entre les éléments catadioptriques est comprise entre 0 et 20 mm.

Selon un mode de réalisation avantageux de l'invention, le diamètre extérieur de la lentille est inférieur ou égal à 53 mm.

### BREVE DESCRIPTION DES DESSINS

D'autres caractéristiques et avantages de l'invention ressortiront de la description détaillée qui va suivre, en référence aux dessins annexés sur lesquels :
- la figure 1 est une vue éclatée d'un éclairage conforme à l'invention,
- la figure 2A est une vue en perspective de la lentille d'un éclairage conforme à l'invention,
- la figure 2B est une vue de face de la lentille de la figure 2A,
- la figure 3 est une vue en perspective d'une ampoule halogène employée dans l'éclairage conforme à l'invention,
- la figure 4 est une vue en coupe d'un éclairage selon l'invention,
- les figures 5A à 5C illustrent une variante de la définition des éléments catadioptriques dans un éclairage selon l'invention.

### DESCRIPTION DETAILLEE DE L'INVENTION

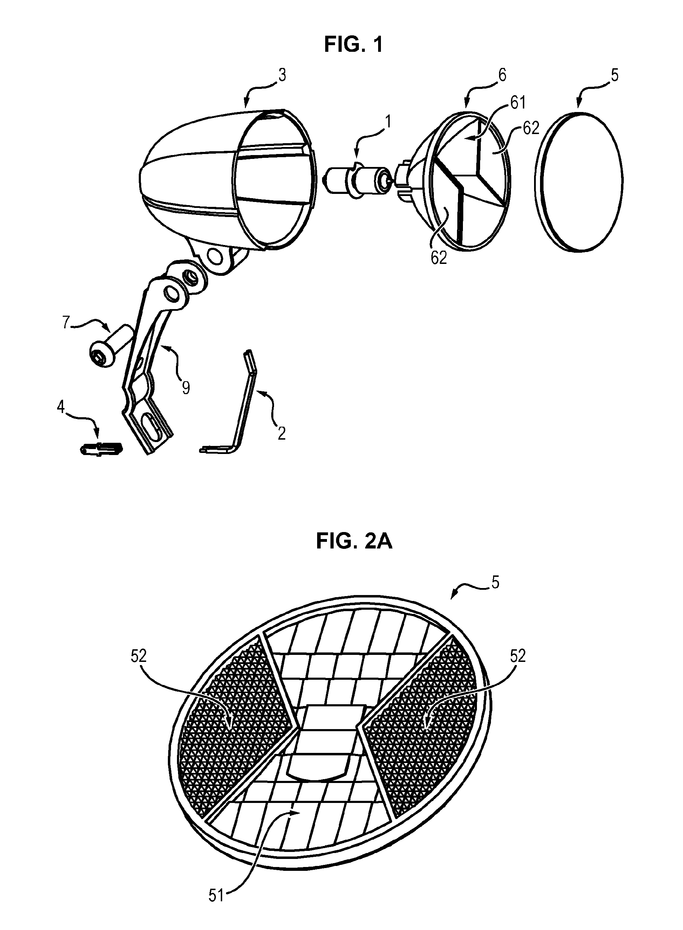

La figure 1 présente de manière éclatée les principaux composants d'un éclairage conforme à l'invention.

Une ampoule halogène 1 est logée dans un cuvelage 3 qui constitue une enveloppe extérieure pour le système d'éclairage.

Le cuvelage peut donc présenter un aspect et une forme extérieurs dictés par des choix esthétiques, et la forme particulière illustrée à la figure 1 n'est donc aucunement limitative.

Le cuvelage 3 est destiné à être fixé sur la fourche avant d'une bicyclette par l'intermédiaire d'une patte de fixation 9 sur laquelle il est maintenu par une vis 7.

D'autres systèmes de fixation permettant une fixation sur l'avant de la bicyclette sont bien sûr possibles.

Par exemple, on pourra monter l'éclairage par un collier fixé par une vis au cuvelage 3 et permettant une adaptation sur le guidon de la bicyclette. On peut aussi utiliser cet éclairage sous une forme de 'bloc dynamo', l'éclairage étant fixé à la dynamo.

L'ampoule est alimentée en courant électrique par un câble 2, lequel est relié à une source d'alimentation, par exemple une dynamo (non représentée), au moyen d'un connecteur 4.

L'alimentation peut aussi se faire par une ou plusieurs batteries ou piles soit incluses dans le cuvelage, soit dans un boîtier déporté, monté sur la bicyclette et relié à l'éclairage par un câble.

L'ampoule 1 débouche vers l'avant dans un réflecteur 6 de forme généralement parabolique, dont les parois intérieures sont adaptées pour réfléchir les rayons lumineux.

Enfin, une lentille 5 de forme généralement circulaire ferme le réflecteur 6 de manière à le protéger et permet de diffuser les rayons réfléchis par le réflecteur.

Comme on peut le voir à la figure 2A, ladite lentille 5 présente typiquement une surface composée de prismes qui ont pour fonction de mettre en forme la lumière pour respecter les normes en matière de qualité d'éclairage.

Cependant, la zone d'éclairement 51, c'est-à-dire la zone à travers laquelle sort la lumière émise par l'ampoule et sur laquelle sont formés les prismes, ne couvre pas toute la surface de la lentille 5, mais présente une forme de sablier symétrique par rapport à un axe horizontal dans la position normale d'installation de l'éclairage sur la bicyclette.

De manière alternative (non illustrée), la bonne mise en forme du faisceau lumineux peut être obtenue entièrement par une forme particulière de la surface réfléchissante, et la lentille ne présenter aucun prisme dans cette zone d'éclairement 51 en forme de sablier.

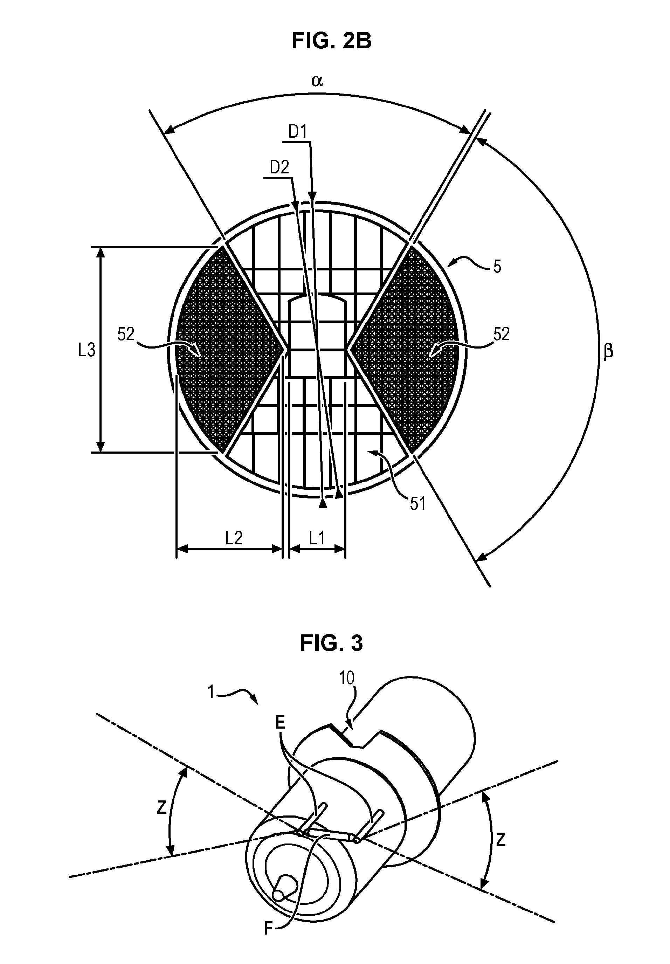

En référence à la figure 2B, la zone la plus étroite de la zone d'éclairement 51, qui se trouve sur l'axe horizontal de symétrie, présente une largeur L1.

De part et d'autre de cette zone étroite, quatre segments rejoignent la circonférence de la lentille 5 vers le haut et vers le bas en définissant un angle α.

Les deux zones complémentaires de la lentille 5 sont des éléments catadioptriques 52.

Lesdits éléments peuvent être intégrés à la lentille 5 (en moulant dans ces zones des prismes adéquats) ou bien rapportés.

Usuellement, afin de réduire les opérations d'assemblage, il est préféré de mouler l'ensemble de la lentille en une seule pièce.

On peut aussi préférer mouler la partie catadioptrique et les prismes séparément et d'assembler le tout par des procédés tels que soudure ultrason, soudure laser, soudure miroir.

En d'autres termes, chaque élément catadioptrique 52 est défini par un secteur angulaire défini par la distance L1 séparant les deux éléments catadioptriques et d'angle β.

Sur la figure, la largeur L1 est non nulle ; cependant, il serait également envisageable d'avoir une largeur L1 nulle, c'est-à-dire avec des éléments catadioptriques en contact au centre de la lentille.

Dans tous les cas, pour que les éléments catadioptriques 52 soient considérés, du point de vue de la réglementation, comme constituant un catadioptre, la distance L1 doit être inférieure à 20 mm, de préférence inférieure à 15 mm.

Les éléments catadioptriques 52 sont symétriques l'un par rapport à l'autre selon un axe vertical dans la position normale d'installation de l'éclairage sur la bicyclette.

Revenant à la figure 1, le réflecteur 6 présente des parois intérieures en vis-à-vis des segments qui délimitent, sur la lentille 5, la zone d'éclairement 51 des éléments catadioptriques 52.

Lesdites parois intérieures, qui sont réfléchissantes, définissent donc une première zone centrale 61 du réflecteur dans laquelle les rayons lumineux émis par le filament de l'ampoule halogène sont réfléchis et sont diffusés par la zone d'éclairement 51 de la lentille 5, et deux zones latérales 62 qui situées en vis-à-vis des éléments catadioptriques 52 de la lentille 5.

Les zones latérales 62 sont avantageusement positionnées dans la zone d'ombre des électrodes de l'ampoule halogène.

La figure 3 illustre une ampoule halogène 1 comprenant un filament F entre deux électrodes E.

Les zones Z correspondent à la zone d'ombre des électrodes E.

L'ampoule devant être positionnée de façon précise et répétable par rapport aux éléments catadioptriques, le système est conçu pour une ampoule intégrant dans son culot un élément d'indexation, positionné à un emplacement déterminé par rapport au filament et aux électrodes.

Dans l'ampoule illustrée à la figure 3, l'élément d'indexation est une encoche 10 qui vient se loger sur un picot fixe par rapport au réflecteur. Il peut s'agir d'un picot moulé en même temps que la parabole. Il peut aussi s'agir d'une bague portant ce picot, et faite en sorte d'être toujours positionnée de la même façon par rapport à la parabole.

Naturellement, tout autre système d'indexation peut être employé sans pour autant sortir du cadre de la présente invention.

Au contraire, une ampoule présentant un simple culot à vis, sans système d'indexation, ne permettrait pas de garantir que les éléments catadioptriques se trouvent systématiquement dans la zone d'ombre des électrodes.

Ainsi, bien que les éléments catadioptriques masquent une surface conséquente de la lentille, la perte en éclairement est négligeable.

Par ailleurs, le diamètre extérieur D1 de la lentille 5 est plus faible que dans les systèmes d'éclairage connus basés sur une ampoule à filament, incluant un catadioptre et répondant aux exigences allemandes et françaises.

Ce résultat a pu être obtenu grâce à une optimisation des dimensions respectives de la zone d'éclairement et des zones catadioptriques.

La méthode d'optimisation peut être soit expérimentale, sur la base de maquettes fonctionnelles, soit réalisée à l'aide d'outil de simulations optiques.

On définit, en se basant sur les règles de l'art du domaine des catadioptres, la surface minimale Scm pour que le catadioptre réponde aux exigences photométriques.

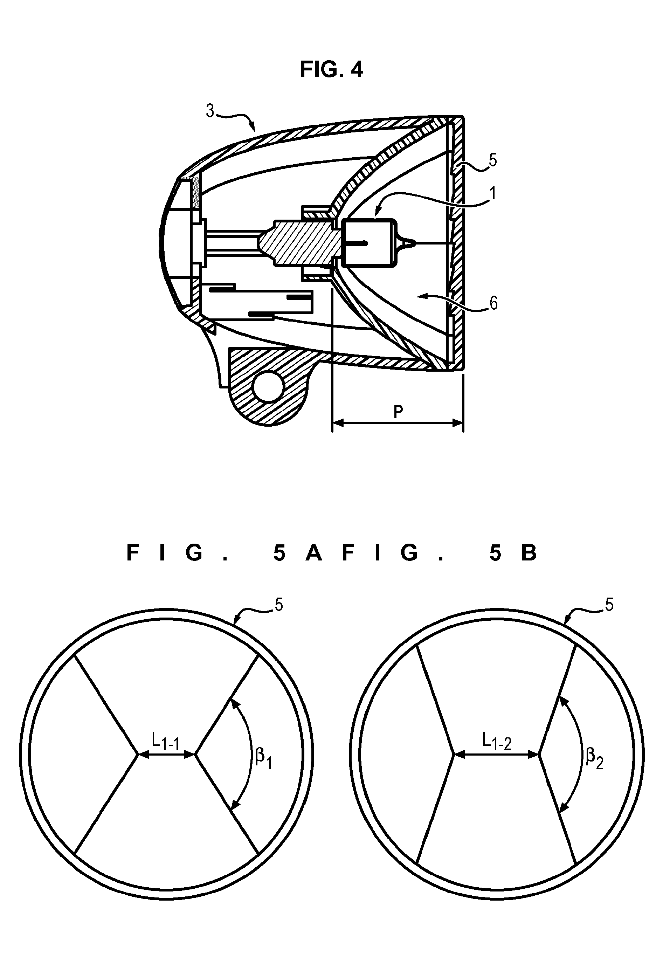

On part alors d'un système optique classique sans catadioptre, dont les dimensions sont le diamètre utile D2 et une profondeur P (cf. figure 4).

Dans le cercle de diamètre D2, on insère alors une zone formée de deux secteurs angulaires symétriques, situés dans la zone d'ombre des électrodes E.

Ladite zone, qui est définie par les paramètres β et L1, présente une surface Sc.

Cette zone, qui sera le catadioptre, est rendue opaque.

On fait alors évoluer les paramètres D2, P, L1 et β avec les contraintes suivantes:
- Les valeurs photométriques de la zone éclairante doivent être conformes aux valeurs objectives (données généralement par la réglementation du pays considéré) ;
- La surface catadioptrique Sc doit être supérieure à la valeur minimale Scm ;
- Les valeurs de D2 et de P doivent être inférieures à l'objectif dimensionnel que l'on se fixe pour l'éclairage.

A titre purement illustratif, un système dont le diamètre extérieur D1 de la lentille est 53 mm, le diamètre utile D2 de la lentille est de 50 mm, la profondeur P est de 27 mm, l'angle α de la zone éclairante est de 60°, la largeur L1 est de 10 mm, et l'angle β des éléments catadioptriques est de 120°, répond aux exigences les plus sévères en termes de qualité d'éclairage et est plus compact que les systèmes connus.

Avec un système connu avec valeur de P équivalente, et qui inclut un catadioptre dans sa partie centrale, il faudrait que le diamètre extérieur D1 soit de l'ordre de 70mm.

Ce gain en compacité va de pair avec une économie de matière à utiliser pour la fabrication de l'éclairage. Ceci résulte également en une diminution de la quantité de matière à recycler en fin de vie du produit.

La méthode d'optimisation peut conduire à plusieurs couples de paramètres L1, β qui permettent de répondre à l'objectif fixé.

Il est alors possible de choisir l'un de ces couples de paramètres pour définir un secteur angulaire qui constituera chacun des éléments catadioptriques.

De manière alternative, on peut mettre à profit cette plage de valeurs possibles pour définir, pour les éléments catadioptriques, des frontières qui ne sont pas constituées de segments mais de lignes courbes.

Ainsi, la figure 5A illustre un premier couple L11, β1 et la figure 5B un second couple L12, β2, qui permettent tous deux d'optimiser l'éclairage et le catadioptre.

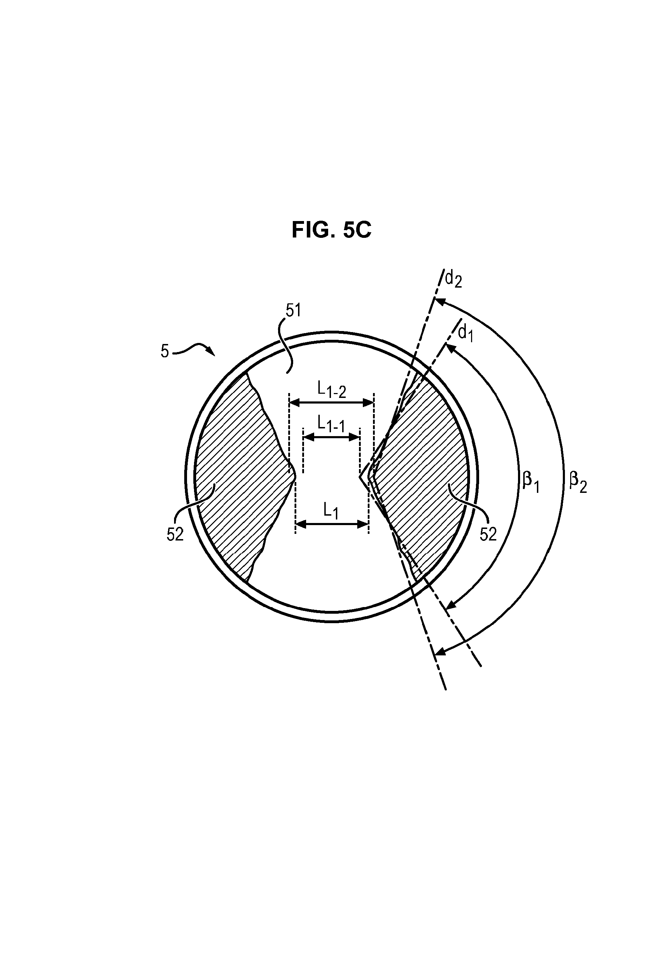

Comme illustré à la figure 5C, il est alors possible de délimiter chaque élément catadioptrique 52 par deux lignes courbes comprises chacune entre la demi-droite d1 du secteur angulaire défini par le couple L11, β1 et la demi-droite d2 du secteur angulaire L12, β2.

Ces lignes courbes peuvent adopter toute forme désirée (pour répondre notamment à des critères esthétiques) pour autant qu'elles restent à l'intérieur de la surface définie par les secteurs angulaires optimaux L11, β1 et L12, β2.

La forme des éléments catadioptriques de la figure 5C est donc donnée uniquement à des fins illustratives et non limitatives.

Il va de soi que les exemples que l'on vient de donner ne sont que des illustrations particulières en aucun cas limitatives quant aux domaines d'application de l'invention.

## Revendications

1. Eclairage avant de bicyclette, comprenant une ampoule halogène (1), un réflecteur (6) pour réfléchir les rayons lumineux émis par le filament de l'ampoule (1), une lentille (5) pour protéger le réflecteur et éventuellement diffuser les rayons réfléchis par le réflecteur (6) à travers une zone d'éclairement (51), et un catadioptre, ledit éclairage étant **caractérisé en ce que** ledit catadioptre comprend deux éléments catadioptriques (52) symétriques agencés à la surface de la lentille (5) dans la zone d'ombre des électrodes de l'ampoule halogène et **en ce que** ladite ampoule (1) présente un élément d'indexation par rapport au réflecteur (6), de sorte à contrôler la position des électrodes par rapport aux éléments catadioptriques (52).

2. Eclairage selon la revendication 1, **caractérisé en ce que** lesdits éléments catadioptriques (52) occupent sensiblement deux secteurs angulaires de la surface de la lentille (5).

3. Eclairage selon l'une des revendications 1 ou 2, **caractérisé en ce que** la zone d'éclairement (51) de la lentille présente une forme générale de sablier, complémentaire de la forme desdits éléments catadioptriques (52).

4. Eclairage selon l'une des revendications 1 à 3, **caractérisé en ce que** la surface de la lentille (5) comporte des prismes dans la zone d'éclairement (51).

5. Eclairage selon l'une des revendications 1 à 4, **caractérisé en ce que** lesdits éléments catadioptriques (52) sont moulés dans la lentille (5).

6. Eclairage selon l'une des revendications 1 à 5, **caractérisé en ce que** lesdits éléments catadioptriques (52) sont rapportés sur la lentille (5).

7. Eclairage selon l'une des revendications 1 à 6, **caractérisé en ce que** la distance minimale (L1) entre les éléments catadioptriques (52) est comprise entre 0 et 20 mm.

8. Eclairage selon l'une des revendications 1 à 7, **caractérisé en ce que** le diamètre extérieur de la lentille est inférieur ou égal à 53 mm.
